# EUROPÄISCHE PATENTSCHRIFT

(11) **EP 1 961 708 B1**
(45) Veröffentlichungstag und Bekanntmachung des Hinweises auf die Patenterteilung: **25.03.2009**
(21) Anmeldenummer: 07001445.1
(22) Anmeldetag: 24.01.2007
(51) Int. Cl.: C03B 23/26

(54) **Verfahren zur Herstellung von Reflektoren aus Glas oder Glaskeramik**
Method for manufacturing reflectors made of glass or glass ceramics
Procédé destiné à la fabrication de réflecteurs en verre ou en vitrocéramique

(43) Veröffentlichungstag der Anmeldung: 27.08.2008
(73) Patentinhaber: Schott AG, 55122 Mainz (DE)
(72) Erfinder: Abraham, Hans-Walter, 64285 Darmstadt (DE); Frei, Gernot, 37581 Bad Gandersheim (DE); Zehner, Armin, 65510 Hühnstetten (DE); Klein, Hans-Jürgen, 38229 Salzgitter Bad (DE); Niklos, Thomas, 64347 Griesheim (DE); Zirfas, Ulrich, 37581 Bad Gandersheim (DE); Mattheis, Willi, 55129 Mainz (DE)
(74) Vertreter: Gahlert, Stefan

(56) Entgegenhaltungen:
- US-A- 2 394 116
- US-A1- 2004 264 200

## Beschreibung

Die Erfindung betrifft ein Verfahren zur Herstellung von Reflektoren aus Glas oder Glaskeramik mit folgenden Schritten:
- Pressen eines nach außen offenen Reflektors mit einem geschlossenen Boden in einer Form bei einer Temperatur oberhalb der Transformationstemperatur;
- Platzieren des Reflektors in einer Öffnung einer Haltung;
- Erwärmen des Reflektors im Bereich seines Bodens.

Ein derartiges Verfahren ist aus der US-A-2394116 bekannt.

Nach dem bekannten Verfahren wird ein aus Glas bestehender Reflektor zunächst durch Pressen eines Gobs in einer Form hergestellt, wobei in seinem Bodenbereich ein Ansatz für eine oder mehrere Öffnungen gebildet wird.

Nach der Entnahme des Reflektors aus seiner Pressform wird dieser Bereich im Boden lokal aufgeheizt und durch eine oder mehrere Brennerflammen werden die gewünschten Öffnungen im Bodenbereich erzeugt.

Ein ähnliches Verfahren ist aus der US 2004/0264200 A1 bekannt.

Hierbei wird ein aus Glas bestehender Reflektor zunächst durch Pressen eines Gobs in einer Form hergestellt und anschließend in seinem Bodenbereich mittels eines Brenners lokal aufgeheizt, so dass nachfolgend mit Hilfe eines Stempels und einer Matrize eine Öffnung aus dem Boden im erweichten Zustand des Glases ausgestanzt werden kann. Anschließend wird der Reflektor im Bodenbereich feuerpoliert, um eine ausreichend glatte Oberfläche zu erzeugen.

Alternativ kann die Öffnung im Bereich des Bodens durch Bohren erzeugt werden. Auch in diesem Fall erfolgt anschließend ein Feuerpolieren, um eine glatte Oberfläche zu erzeugen.

Es hat sich gezeigt, dass bei Reflektoren, die nach den bekannten Verfahren hergestellt sind, zwar eine glatte Oberfläche im Bodenbereich gewährleistet ist, dass jedoch die Toleranzen bezüglich der erzeugten Öffnung ohne zusätzliche Nachbearbeitung häufig nicht eingehalten werden können. Aus diesem Grunde ist meist eine Nachbehandlung der Reflektoren durch Schleifen notwendig.

Vor diesem Hintergrund liegt der Erfindung die Aufgabe zugrunde, ein Verfahren zur Herstellung von Reflektoren aus Glas oder Glaskeramik bereitzustellen, mit dem eine ausreichend präzise Herstellung von Öffnungen im Bodenbereich möglichst ohne weitere Nachbearbeitung ermöglicht ist. Dabei soll eine möglichst präzise Einhaltung der maßgeblichen Toleranzen ermöglicht werden, ohne dass eine aufwendige Nachbearbeitung des Reflektors durch Schleifen oder dergleichen notwendig wird.

Diese Aufgabe wird bei einem Verfahren gemäß der eingangs genannten Art durch folgende Schritte gelöst:
- Anheben des Reflektors an seinem Boden mittels einer Matrize von unten;
- Ausstanzen mindestens einer Öffnung aus dem Boden durch Bewegung mindestens eines Stößels in mindestens eine zugeordnete Öffnung in der Matrize.

Die Aufgabe der Erfindung wird auf diese Weise vollkommen gelöst.

Da der Boden vor dem Ausstanzen der Öffnung mittels einer Matrize von unten angehoben wird, wird das Entstehen eines Spaltes zwischen dem Boden des Reflektors und der Matrize vermieden.

Auf diese Weise wird vermieden, dass während des nachfolgenden Ausstanzvorgangs Glasfäden gezogen werden, welche sich bei geringen verbleibenden Spalten zwischen Reflektorboden und Matrizenoberfläche bilden könnten. So wird eine präzise Herstellung der auszustanzenden Öffnung gewährleistet.

In vorteilhafter Weiterbildung der Erfindung wird der Reflektor beim Schritt des Anhebens durch die Matrize im Bereich seines Bodens an der Matrize seitlich abgestützt.

Auf diese Weise kann die Positionierung der auszustanzenden Öffnung an dem Reflektor noch genauer kontrolliert werden.

In bevorzugter Weiterbildung der Erfindung wird der Reflektor an von der Matrize nach oben hervorstehenden Halteelementen seitlich abgestützt.

Da die Halteelemente somit mit der Matrize verbunden sind, kann der Reflektor in einfacher Weise beim Anheben mittels der Matrize von unten automatisch seitlich abgestützt und zentriert werden.

Auf diese Weise ist eine besonders korrekte Positionierung der ausgestanzten Öffnung gewährleistet.

So weit der Reflektor einen topfförmig ausgebildeten Boden aufweist, so wird dieser beim Schritt des Anhebens durch die Matrize vorzugsweise durch Anlage an von der Matrize gehaltenen stabförmigen Halteelementen seitlich abgestützt.

Auf diese Weise ist eine einfache und zuverlässige Abstützung an den Halteelementen gewährleistet.

Hierbei werden vorzugsweise stabförmige Halteelemente in Form von Hartmetallstiften verwendet.

Auf diese Weise wird eine vorzeitige Abnutzung der Halteelemente durch Angriff des über den Erweichungspunkt hinaus erwärmten Glases weitgehend vermieden.

Während des Schritt des Anhebens des Reflektorbodens durch die Matrize wird diese vorzugsweise nur um einen geringen Betrag angehoben, nämlich um einen Betrag zwischen 0,1 und 3 mm, vorzugsweise zwischen 0,1 und 2 mm, weiter bevorzugt zwischen 0,1 und 1 mm, besonders bevorzugt zwischen 0,1 und 0,5 mm.

Durch eine derartig geringe Anhebung der Matrize wird eine präzise Anlage der Matrize an dem Reflektorboden gewährleistet und gleichzeitig durch das Anheben des Reflektors bedingten Instabilitäten des Reflektors entgegengewirkt.

Gemäß einer weiteren Ausgestaltung der Erfindung wird der Reflektor während des Schritt des Anhebens mittels der Matrize aus der Öffnung der Halterung abgehoben und lediglich seitlich im Bereich seines Bodens an der Matrize gehalten.

Auf diese Weise ist die Positionierung der auszustanzenden Öffnung im Reflektorboden ausschließlich durch die Matrize und die damit verbundenen Halteelemente vorgegeben, so dass sich eine besonders hohe Präzision bei der Positionierung der auszustanzenden Öffnung(en) am Reflektorboden ergibt.

Gemäß einer weiteren Ausgestaltung der Erfindung wird der Reflektor beim Schritt des Anhebens mittels einer Matrize gegen ein Widerlager, vorzugsweise in Form einer Platte, gedrückt.

Auf diese Weise kann der Abstand zwischen dem oberen Ende des Reflektors und dem Reflektorboden präzise auf ein Sollmaß gebracht werden, ohne dass hierzu eine Nachbehandlung etwa durch Schleifen erforderlich ist. Etwaige Toleranzen werden hierbei im Bodenbereich durch minimales seitliches Auswandern des Materials ausgeglichen, was jedoch nicht nachteilig ist, da in der Dimension quer zur Längsachse des Reflektors größere Toleranzen zulässig sind. Trotz vereinfachter Herstellung werden so vorgegebene Toleranzen in Längsrichtung des Reflektors präzise eingehalten.

Der Reflektor wird vor dem Schritt des Ausstanzens der Öffnung aus dem Boden vorzugsweise im Bereich seines Bodens mittels eines Brenners mit einer Aufheizgeschwindigkeit von mindestens 100 K/s, vorzugsweise von mindestens 200 K/s, weiter bevorzugt von mindestens 300 K/s auf eine Temperatur deutlich oberhalb der Transformationstemperatur T_{g} erwärmt, bei der das Material ausreichend erweicht ist, um ein Ausstanzen der Öffnung(en) zu ermöglichen.

Vorzugsweise wird der Reflektor im Bereich seines Bodens mittels eines Brenners lokal auf eine Temperatur von 700 - 1000°C, vorzugsweise im Bereich von 800 - 1000°C, weiter bevorzugt im Bereich von 850 - 950°C erwärmt.

Je nach Art und Zusammensetzung des verwendeten Glases bzw. der verwendeten Glaskeramik wird so ein optimaler Ausstanzvorgang ermöglicht, ohne dass die Oberfläche des Glases bzw. der Glaskeramik beschädigt wird oder dass sich Glasfäden während des Ausstanzvorgangs ergeben.

Vorzugsweise wird der Reflektor nach seiner Herstellung durch Pressen etwa mittels einer Handlingeinrichtung aus der Form im noch heißen Zustand entnommen und in die Öffnung der Halterung eingesetzt.

Anschließend wird vorzugsweise zur Erwärmung ein Brenner verwendet, der von unten gegen den Boden des Reflektors gerichtet wird.

Hierbei wird vorzugsweise ein H₂O₂-Brenner zur Erwärmung verwendet. Mittels eines derartigen Brenners kann eine sehr schnelle gezielte Erwärmung des Reflektors im Bodenbereich in kürzester Zeit ermöglicht werden, wodurch einerseits die Bearbeitungszeit verkürzt wird und andererseits eine Erwärmung des Reflektors selbst im Bereich seiner optisch wirksamen Innenfläche und damit ein Verziehen des Reflektors vermieden wird.

Es versteht sich, dass die vorstehend genannten und die nachstehend noch zu erläuternden Merkmale der Erfindung nicht nur in der jeweils angegebenen Kombination, sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Prinzipskizze zur Herstellung eines Reflektors durch einen Pressvorgang aus einem Gob;
- Fig. 2: einen vergrößerten Querschnitt durch einen in eine Öffnung einer Halterung eingesetzten Reflektor mit einem zugeordneten Brenner zur lokalen Erwärmung des Bodenbereiches;
- Fig. 3: eine Schnittdarstellung durch den Reflektor gemäß Fig. 2, aus der der nachfolgende Schritt des Anhebens des Reflektors mittels einer Matrize von unten ersichtlich ist;
- Fig. 4: eine Aufsicht auf den Reflektor gemäß Fig. 3 von oben, nach Ausstanzen einer mittigen Öffnung aus dem Boden und
- Fig. 5: eine Aufsicht auf eine alternative Ausführung einer Matrize mit zugeordneten Halteelementen, die zum Ausstanzen von zwei nebeneinander angeordneten Öffnungen aus dem Boden eines Reflektors ausgebildet ist.

Das erfindungsgemäße Verfahren eignet sich zur Herstellung von Reflektoren aus Glas oder Glaskeramik, die insbesondere zur Beleuchtung mit energiereichen Lichtquellen etwa bei Beamern oder dergleichen eingesetzt werden. Da solche Reflektoren einer hohen thermischen Belastung ausgesetzt sind und gleichzeitig eine präzise Einhaltung der Toleranzen erforderlich ist, werden diese seit einiger Zeit aus Gläsern oder Glaskeramik hergestellt, die meist einen thermischen Ausdehnungskoeffizienten im Bereich von etwa 30 - 45 x 10⁻⁷/K aufweisen und eine ausreichende thermische Beständigkeit von bis zu 600°C oder mehr aufweisen. Die Innenoberfläche derartiger Reflektoren wird nach der Herstellung mit einem geeigneten Material, z.B. Aluminium, beschichtet und kann dann etwa zur Reflektion von Licht bei energiereichen Beleuchtungsquellen verwendet werden.

Erfindungsgemäß werden nun im Boden eines solchen Reflektors herzustellende Öffnung(en) durch Ausstanzen des erweichten Materials erzeugt, wobei durch eine besondere Verfahrensführung eine sehr präzise Einhaltung von Toleranzen und eine hohe Oberflächenqualität gewährleistet ist.

Nach dem erfindungsgemäßen Verfahren wird ein solcher Reflektor zunächst durch einen Pressvorgang aus einem Gob in an sich bekannter Weise hergestellt. Als Ausgangsmaterial für den Reflektor sind grundsätzlich alle Gläser geeignet, die die Spezifikationen für einen derartigen Reflektor aus Glas oder Glaskeramik erfüllen. Im Allgemeinen liegt die Transformationstemperatur Tg bei mindestens 550°C.

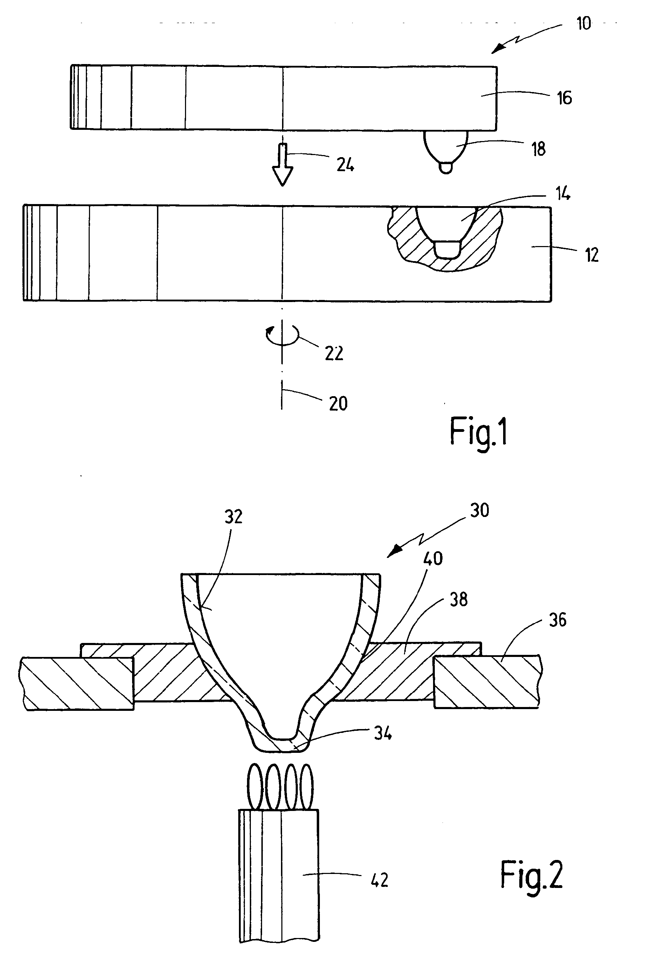

Fig. 1 zeigt eine insgesamt mit der Ziffer 10 bezeichnete Pressvorrichtung zur Herstellung von Reflektoren, mit einer Platte 12, in der eine Mehrzahl von Formöffnungen 14 vorgesehen ist. An einem Drehteller 16 ist ein zugeordneter Pressstempel 18 vorgesehen. Der Drehteller 16 kann um seine Drehachse 20 verdreht werden, wie durch einen Pfeil 22 angedeutet ist, und kann gegen die Platte 12 in Richtung des Pfeiles 24 verfahren werden, um aus einem in einer Formöffnung 14 positionierten Gob ein Pressglasprodukt in der gewünschten Form eines Reflektors herzustellen. Mittels des Drehtellers 16 können nacheinander eine Reihe von Reflektoren an den verschiedenen Formöffnungen 14 der Platte 12 nach Zuführung jeweils eines Gobs in eine der Formöffnungen 14 mittels einer zugeordneten Handlingeinrichtung gepresst werden.

Der Pressvorgang geschieht in an sich bekannter Weise bei einer Temperatur deutlich oberhalb der Transformationstemperatur in einem Bereich, in dem die betreffende Glasmatrix ausreichend erweicht ist.

Während des Pressvorgangs lässt sich zwar die Form der Reflektorinnenfläche ausreichend präzise abbilden, ohne dass eine aufwendige Nachbearbeitung der Innenoberfläche ermöglicht ist, jedoch können Öffnungen, die im Bodenbereich erzeugt werden müssen, während des Pressvorgangs nicht mit ausreichender Präzision hergestellt werden.

Hierzu werden die Reflektoren unmittelbar nach ihrer Herstellung mittels eines geeigneten Handlinggerätes im noch warmen Zustand entnommen und in eine geeignete Halterung 38 gemäß Fig. 2 eingesetzt. Die Halterung 38 besteht aus einer in einem Aufnahmetisch 36 gehaltenen Platte 38, in der eine Öffnung 40 vorgesehen ist, die an die Kontur der Außenoberfläche des Reflektors 30 angepasst ist. Ein in die Halterung 38 im noch heißen Zustand eingesetzter Reflektor 30 wird in einem anschließenden Verfahrensschritt im Bereich seines topfförmig ausgebildeten Bodens 34 zunächst von unten mit einem H₂O₂-Brenner 42 gezielt erwärmt. Der verwendete Brenner 42 weist eine sehr hohe Brennerleistung auf und ermöglicht in kurzer Zeit ein Aufheizen von einer Temperatur im Bereich von etwa 500°C wieder auf einen Bereich mit Rotglut, also auf eine Temperatur in der Größenordnung von etwa 900°C, in weniger als einer Sekunde, z.B. in 0,8 Sekunden.

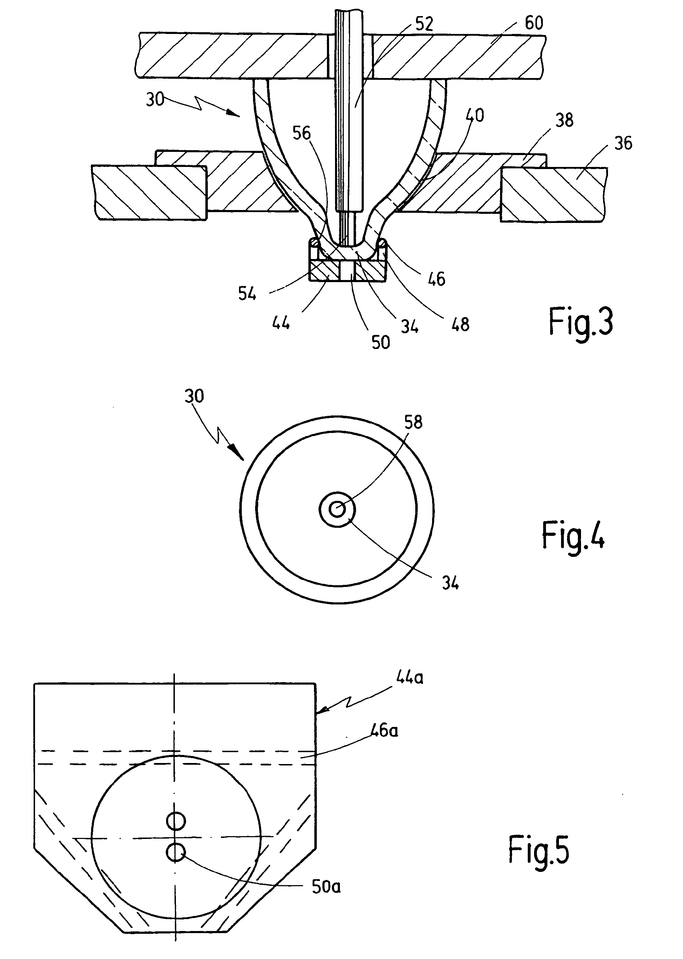

Der Aufnahmetisch 36 wird anschließend weggedreht und in einem nachfolgenden Schritt, der in Fig. 3 näher erläutert ist, die mindestens eine Öffnung am Boden 34 des Reflektors 30 durch einen Stanzvorgang hergestellt. Hierzu wird von unten her eine Matrize 44 gegen den topfförmig ausgebildeten Boden 34 gedrückt, wodurch der Reflektor um einen geringen Betrag, der in der Regel zwischen 0,1 und 1 mm liegt, angehoben wird.

Auf der Außenseite des Reflektors 30 kann hierbei, wie in Fig. 3 gezeigt, eine Platte 60 als Anlagefläche für den Reflektor 30 verwendet werden. Da der Reflektor 30 während des Schritt des Anhebens durch die Matrize 44 nach oben leicht von seiner Auflage in der Öffnung 40 der Halterung 34 abgehoben wird, sind zwecks einer präzisen Positionierung des Reflektors 30 Halteelemente 46 vorgesehen, durch die der Reflektor 30 in einem Bereich 56 seines topfförmigen Bodens 34, vorzugsweise etwa im unteren Drittel des Bodens 34, gehalten wird.

Durch diese Halteelemente 46, die vorzugsweise als Hartmetallstifte ausgeführt sind und die über Stützarme 48 unmittelbar an der Matrize 44 befestigt sind, wird der Reflektor 30 während des Anhebens durch die Matrize 44 seitlich abgestützt und präzise positioniert.

Auf diese Weise wird bei einem nachfolgenden Stanzvorgang eine präzise Positionierung der auszustanzenden Öffnung(en) gewährleistet.

In der Matrize 44 sind entsprechend der auszustanzenden Öffnung(en) des Reflektorbodens eine oder mehrere zugeordnete Öffnung(en) vorgesehen, in die jeweils ein Stanzabschnitt 54 eines oder mehrerer zugeordneter Stößel 52 einfahren kann, um die Öffnung bzw. die Öffnungen aus dem Boden 34 des Reflektors 30 ausstanzen zu können.

Der Stanzvorgang erfolgt mit einem Stempel 52 aus Hartmetall, der einen glatten Stanzabschnitt 54 mit scharfen Kanten aufweist. Dabei wird ein gewisses Spiel von wenigen Zehntel Millimetern zwischen dem Stanzabschnitt 54 und der zugeordneten Öffnung 50 der Matrize 44 verwendet. Durch die Anlage des Reflektors 30 an seinem oberen Ende gegen die Platte 60 während des Anhebens der Matrize 44 von unten wird ein präzises Maß zwischen dem oberen Ende des Reflektors 30 und dem unteren Ende des Reflektorbodens 34 eingehalten, da das zuvor erweichte Material etwaige Abweichungen durch seitliches Ausweichen ausgleicht. Gleichzeitig wird eine exakte Positionierung des Reflektors 30 unterstützt. Ferner wird durch Andrücken der Matrize 44 gegen den Reflektorboden 34 von unten die Entstehung von Glasfäden während des Stanzschrittes vermieden.

Gegebenenfalls kann zusätzlich die Matrize 44 und/oder der Stempel 52 zusätzlich gekühlt werden.

Bei der Ausführung gemäß Fig. 3 sind jeweils einander gegenüberliegende Halteelemente 46, also insgesamt vier Halteelemente vorgesehen.

Alternativ können beispielsweise auch drei Halteelemente 46a gemäß Fig. 5 verwendet werden, die in einer Dreieckskonfiguration angeordnet sind. Fig. 5 zeigt die Aufsicht auf eine entsprechend ausgebildete Matrize 44a, in der drei Hartmetallstifte als Halteelemente 46a in einer Dreieckskonfiguration angeordnet sind. Die Matrize 44a weist im Gegensatz zu der Matrize 44 gemäß Fig. 3 zwei Öffnungen 50a auf, so dass während des Stanzvorgangs zwei nebeneinanderliegende Öffnungen aus dem Boden 34 des Reflektors 30 ausgestanzt werden können.

Fig. 4 zeigt eine Aufsicht des Reflektors 30 nach Ausstanzen einer Öffnung 58 am Boden 34.

Es versteht sich, dass die Form des hier dargestellten Reflektors 30 lediglich rein beispielhafter Natur ist und dass das erfindungsgemäße Verfahren unabhängig von der Form des jeweiligen Reflektors 30 angewendet werden kann.

Außerdem ist das erfindungsgemäße Verfahren von der Art des verwendeten Materials für das Glas oder die Glaskeramik weitgehend unabhängig, sofern in einem geeigneten Temperatur- bzw. Viskositätsbereich gearbeitet wird.

## Patentansprüche

1. Verfahren zur Herstellung von Reflektoren aus Glas oder Glaskeramik mit folgenden Schritten:
- Pressen eines nach außen offenen Reflektors (30) mit einem geschlossenen Boden (34) in einer Form (14) bei einer Temperatur oberhalb der Transformationstemperatur (T_{g});
- Platzieren des Reflektors (30) in einer Öffnung (40) einer Halterung (38);
- Erwärmen des Reflektors (30) im Bereich seines Bodens (34);
**gekennzeichnet durch** die Schritte:
- Anheben des Reflektors (30) an seinem Boden (34) mittels einer Matrize (44; 44a) von unten;
- Ausstanzen mindestens einer Öffnung (58) aus dem Boden (34) **durch** Bewegen mindestens eines Stößels (52) in mindestens eine zugeordnete Öffnung (50; 50a) in der Matrize (44; 44a).

2. Verfahren nach Anspruch 1, **dadurch gekennzeichnet, dass** der Reflektor (30) beim Schritt des Anhebens durch die Matrize (44; 44a) im Bereich seines Bodens (34) an der Matrize (44; 44a) seitlich abgestützt wird.

3. Verfahren nach Anspruch 2, **dadurch gekennzeichnet, dass** der Reflektor (30) an von der Matrize (44; 44a) nach oben hervorstehenden Halteelementen seitlich abgestützt wird.

4. Verfahren nach Anspruch 3, **dadurch gekennzeichnet, dass** der Reflektor (30) im Bereich (34) seines topfförmig ausgebildeten Bodens durch Anlage an von der Matrize (44; 44a) gehaltenen stabförmigen Halteelementen (46; 46a) seitlich abgestützt wird.

5. Verfahren nach Anspruch 4, **dadurch gekennzeichnet, dass** stabförmige Halteelemente (46; 46a) in Form von Hartmetallstiften verwendet werden.

6. Verfahren nach einem der vorhergehenden Ansprüche, **dadurch gekennzeichnet, dass** der Reflektor (30) durch die Matrize (44; 44a) um einen Betrag zwischen 0,1 und 3 mm, vorzugsweise zwischen 0,1 und 2 mm, weiter bevorzugt zwischen 0,1 und 1 mm, besonders bevorzugt zwischen 0,1 und 0,5 mm angehoben wird.

7. Verfahren nach einem der vorhergehenden Ansprüche, **dadurch gekennzeichnet, dass** der Reflektor (30) während des Schrittes des Anhebens mittels der Matrize (44; 44a) aus der Öffnung (40) der Halterung (38) abgehoben und lediglich seitlich im Bereich seines Bodens (34) an der Matrize (44; 44a) gehalten wird.

8. Verfahren nach einem der vorhergehenden Ansprüche, **dadurch gekennzeichnet, dass** der Reflektor (30) beim Schritt des Anhebens mittels der Matrize (44; 44a) gegen ein Widerlager, vorzugsweise in Form einer Platte (60), gedrückt wird.

9. Verfahren nach einem der vorhergehenden Ansprüche, **dadurch gekennzeichnet, dass** der Reflektor (30) im Bereich seines Bodens (34) mittels eines Brenners (42) mit einer Aufheizgeschwindigkeit von mindestens 100 K/s, vorzugsweise von mindestens 200 K/s, weiter bevorzugt von mindestens 300 K/s erwärmt wird.

10. Verfahren nach einem der vorhergehenden Ansprüche, **dadurch gekennzeichnet, dass** der Reflektor (30) im Bereich seines Bodens (34) mittels eines Brenners (42) auf eine Temperatur von 700 bis 1000 °C, vorzugsweise im Bereich von 800 bis 1000 °C, weiter bevorzugt im Bereich von 850 bis 950 °C, erwärmt wird.

11. Verfahren nach einem der vorhergehenden Ansprüche, **dadurch gekennzeichnet, dass** der Reflektor (30) nach seiner Herstellung durch Pressen aus der Form (14) im noch heißen Zustand entnommen und in die Öffnung (40) der Halterung (38) eingesetzt wird.

12. Verfahren nach einem der vorhergehenden Ansprüche, **dadurch gekennzeichnet, dass** zur Erwärmung ein Brenner (42) verwendet wird, der von unten gegen den Boden (34) des Reflektors (30) gerichtet wird.

13. Verfahren nach einem der vorhergehenden Ansprüche, **dadurch gekennzeichnet, dass** der Reflektor (30) im Bereich seines Bodens (34) mittels eines H₂O₂-Brenners (42) erwärmt wird.

## Claims

1. A method of producing reflectors from glass or glass ceramics comprising the steps of:
- molding a reflector (30) being open to the outside and having a closed bottom (34) in a mold (14) at a temperature above the transformation temperature (T_{g});
- placing the reflector (30) in an opening (40) of a holder (38);
- heating up the reflector (30) in the area of its bottom (34);
**characterized by** the steps of
- lifting the bottom (34) of the reflector (30) from below using a die (44; 44a);
- punching out at least one opening (58) from the bottom (34) by moving at least one plunger (52) into at least one matching opening (50; 50a) in the die (44; 44a).

2. The method of claim 1, **characterized in that** the reflector (30) is supported laterally on the die (44; 44a) in the area of its bottom (34) while it is lifted by the die (44; 44a).

3. The method of claim 2, **characterized in that** the reflector (30) is supported laterally on holding elements that project from the die (44; 44a) in upward direction.

4. The method of claim 3, **characterized in that** the reflector (30) preferably is held laterally, in the area (34) of its pot-shaped bottom, by its contact with rod-shaped holding elements (46; 46a) mounted on the die (44; 44a).

5. The method of claim 4, **characterized in that** rod-shaped holding elements (46; 46a) configured as hard metal pins are used.

6. The method of any of the preceding claims, **characterized in that** the reflector (30) is lifted by the die (44; 44a) by an amount of between 0.1 and 3 mm, preferably between 0.1 and 2 mm, more preferably between 0.1 and 1 mm, most preferably between 0.1 und 0.5 mm.

7. The method of any of the preceding claims, **characterized in that** the reflector (30) is lifted off the opening (40) of the holder (38) while it is lifted by the die (44, 44a), being merely supported on the die (44; 44a) laterally, in the area of its bottom (34).

8. The method of any of the preceding claims, **characterized in that** the reflector (30) is urged against an abutment, preferably in the form of a plate (60), while it is lifted by the die (44; 44a).

9. The method of any of the preceding claims, **characterized in that** the reflector (30) is heated up in the area of its bottom using a burner (42) with a heating-up rate of at least 100 K/s, preferably of at least 200, K/s, more preferably of at least 300 K/s.

10. The method of any of the preceding claims, **characterized in that** the reflector (30) is heated up in the area of its bottom (34) to a temperature of 700 to 1000° Celsius, preferably in the range of 800 - 1000° Celsius, more preferably in the range of 850 to 950° Celsius, using a burner (42).

11. The method of any of the preceding claims, **characterized in that** the reflector (30), following its production by molding, is removed from the mold (14) in hot condition and is placed into the opening (40) of the holder (38).

12. The method of any of the preceding claims, **characterized in that** a burner (42) is used for heating that is directed against the bottom (34) of the reflector (30) from below.

13. The method of any of the preceding claims, **characterized in that** the reflector (30) is heated in the area of its bottom (34) using a H₂O₂ burner (42).

## Revendications

1. Procédé de fabrication de réflecteurs en verre ou en vitrocéramique, comportant les étapes suivantes :
- moulage par pression d'un réflecteur (30), ouvert vers l'extérieur et muni d'un fond (34) fermé, dans un moule (14) à une température supérieure à la température de transformation (T_{g}) ;
- positionnement du réflecteur (30) dans une ouverture (40) d'un support (38) ;
- chauffage du réflecteur (30) dans la zone de son fond (34) ;
**caractérisé par** les étapes :
- soulèvement du réflecteur (30) au niveau de son fond (34) par le bas au moyen d'une matrice (44 ; 44a) ;
- découpage d'au moins une ouverture (58) dans le fond (34) par le déplacement d'au moins un poinçon (52) dans au moins une ouverture (50 ; 50a) correspondante dans la matrice (44 ; 44a).

2. Procédé selon la revendication 1, **caractérisé en ce que** le réflecteur (30), pendant l'étape au cours de laquelle il est soulevé dans la zone de son fond (34) au moyen de la matrice (44 ; 44a), est mis en appui latéralement sur la matrice (44 ; 44a).

3. Procédé selon la revendication 2, **caractérisé en ce que** le réflecteur (30) est mis en appui latéralement sur des éléments de fixation en saillie vers la haut sur la matrice (44 ; 44a).

4. Procédé selon la revendication 3, **caractérisé en ce que** le réflecteur (30), dans la zone (34) de son fond en forme de godet, est supporté latéralement par la mise en appui sur des éléments de fixation (46 ; 46a) en forme de barres supportées par la matrice (44 ; 44a).

5. Procédé selon la revendication 4, **caractérisé en ce que** les éléments de fixation (46 ; 46a) en forme de barres sont utilisés sous la forme de tiges en carbure.

6. Procédé selon l'une quelconque des revendications précédentes, **caractérisé en ce que** le réflecteur (30) est soulevé par la matrice (44 ; 44a) sur une distance entre 0,1 et 3 mm, de préférence entre 0,1 et 2 mm, encore mieux entre 0,1 et 1 mm, de manière particulièrement préférée entre 0,1 et 0,5 mm.

7. Procédé selon l'une quelconque des revendications précédentes, **caractérisé en ce que** le réflecteur (30), pendant l'étape au cours de laquelle il est soulevé au moyen de la matrice (44 ; 44a), est soulevé hors de l'ouverture (40) du support (38) et est maintenu uniquement latéralement dans la zone de son fond (34) contre la matrice (44 ; 44a).

8. Procédé selon l'une quelconque des revendications précédentes, **caractérisé en ce que** le réflecteur (30), pendant l'étape au cours de laquelle il est soulevé au moyen de la matrice (44 ; 44a), est poussé contre une butée ayant de préférence la forme d'une plaque (60).

9. Procédé selon l'une quelconque des revendications précédentes, **caractérisé en ce que** le réflecteur (30), dans la zone de son fond (34), est chauffé au moyen d'un brûleur (42) à une vitesse de chauffage d'au moins 100 K/s, de préférence d'au moins 200 K/s, encore mieux d'au moins 300 K/s.

10. Procédé selon l'une quelconque des revendications précédentes, **caractérisé en ce que** le réflecteur (30), dans la zone de son fond (34), est chauffé au moyen d'un brûleur (42) à une température de 700 à 1 000°C, de préférence dans la plage de 800 à 1 000°C, encore plus préférentiellement dans la plage de 850 à 950°C.

11. Procédé selon l'une quelconque des revendications précédentes, **caractérisé en ce que** le réflecteur (30), après sa réalisation par moulage par pression, est retiré hors du moule (14) à l'état encore chaud et est introduit dans l'ouverture (40) du support (38).

12. Procédé selon l'une quelconque des revendications précédentes, **caractérisé en ce que** l'on utilise un brûleur (42) pour le chauffage, lequel est dirigé depuis le bas contre le fond (34) du réflecteur (30).

13. Procédé selon l'une quelconque des revendications précédentes, **caractérisé en ce que** le réflecteur (30), dans la zone de son fond (34), est chauffé au moyen d'un brûleur H₂O₂ (42).
